(19) Europäisches Patentamt
European Patent Office
Office européen des brevets

(11) EP 1 359 173 B1

(12) EUROPEAN PATENT SPECIFICATION

(45) Date of publication and mention of the grant of the patent:
**06.07.2005 Bulletin 2005/27**

(51) Int Cl.$^7$: **C08G 16/00**, C08F 290/06, C09D 201/02

(21) Application number: **02009287.0**

(22) Date of filing: **29.04.2002**

# (54) Polymerizable solid compositions

Feste polymerisierbare Gemische

Compositions solids polymérisables

(84) Designated Contracting States:
**DE**

(43) Date of publication of application:
**05.11.2003 Bulletin 2003/45**

(73) Proprietor: **DAINIPPON INK AND CHEMICALS, INC.**
**Itabashi-ku Tokyo (JP)**

(72) Inventors:
- **Gaudl, Kai Uwe Dr., c/o DIC Berlin, R&D Lab. 13403 Berlin (DE)**
- **Lachowicz, Artur Dr., c/o DIC Berlin, R&D Lab. 13403 Berlin (DE)**
- **Grahe, Gerwald F. Dr., c/o DIC Berlin, R&D Lab. 13403 Berlin (DE)**

(74) Representative: **Albrecht, Thomas, Dr. et al**
**Kraus & Weisert,**
**Thomas-Wimmer-Ring 15**
**80539 München (DE)**

(56) References cited:
**GB-A- 2 323 599**
**US-A- 4 217 396**
**US-A- 4 408 018**
**US-A- 5 539 017**
**US-A- 5 945 489**

- **PATENT ABSTRACTS OF JAPAN vol. 2000, no. 10, 17 November 2000 (2000-11-17) & JP 2000 191601 A (TOAGOSEI CO LTD), 11 July 2000 (2000-07-11)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 359 173 B1

## Description

This invention relates to polymerizable solid compositions useful as powder coatings or as components to make powder coatings. More particularly, this invention relates to solid compositions containing polymerizable ethylenically unsaturated double bonds and β-dicarbonyl groups. Such compositions are curable by means of exposure to heat or radiation, typically ultraviolet (UV) radiation.

Powder coatings, which are dry, finely grinded, free flowing solid materials at room temperature, have gained considerable interest in the last two decades Powder coatings are user and environment friendly materials, since they are virtually free of volatile organic compound's (VOC's). This eliminates the solvent emission problems associated with liquid coatings, such as air pollution and dangers to the health of workers employed in coatings operations. Furthermore, powder coatings are essentially 100% recyclable. Over sprayed powders can be fully reclaimed and recombined with the powder feed. This provides very high coating efficiencies and substantially reduces the amount of generated waste.

Despite their advantages, conventional powder coatings often suffer from high curing temperatures and long curing times. Consequently, heat sensitive substrates are difficult to coat and demand low curing temperatures, preferably below 100°C. For example wood or wood-containing products, such as particle board or fiber board, contain residual moisture and resinous binders for substrate integrity. Outgassing of the volatiles at high curing temperatures during the curing process may result in blistering, craters, pinholes and other surface defects.

Therefore, low temperature powder coating systems have been proposed in the last years for coating of heat sensitive substrates, especially such which can be hardened by means of radiation, preferably ultraviolet light. Powder coatings, cured or hardened by ultraviolet light also require exposure to heat to some extent in order to provide sufficient melt and flow out into a continuous molten film on the substrate prior to the curing process by ultraviolet light. The applied temperature must be either above the glass transition temperature (Tg), which is preferably >35°C for powder coatings and above the melt temperature of the solid composition. However, the heat load on the substrate is significantly lower compared to conventional heat curable powder coatings, since the ultraviolet curable powders are designed to flow out at much lower temperatures, typically below 100°C. After leveling, the molten coating is exposed to ultraviolet light, which rapidly cures the film. Since the hardening or crosslinking is triggered by ultraviolet radiation rather than heat, this procedure allows the powder to be cured more quickly and at much lower temperatures than conventional heat curable powders.

Products containing ethylenically unsaturated double bonds are particularly useful to design ultraviolet curable coatings, since the reactive double bonds such as acrylates undergo rapid polymerization when exposed to ultraviolet radiation. These curing agents though extremely useful in liquid radiation coatings, have only gained limited use in powder coatings. In general, the available oligomers and polymers containing ethylenically unsaturated double bonds are liquid, resin-like or semi-solid with low glass transition temperatures and therefore not suitable for powder coatings.

United States patent 5,539,017 relates to the use of a thermally curable composition as dental material or constituent of a dental material, which composition contains one or more β-dicarbonyl compounds and one or more α, β-unsaturated carboxylic acid esters, the curing of the composition taking place in the presence of a catalyst base.

It is therefore a primary object of this invention to provide solid compositions, which are useful as low temperature curable powder coatings or useful as components to make low temperature powder coatings.

This invention provides solid mixtures of oligomers and polymers, hereinafter also termed as solid compositions of this invention, which are curable preferably by ultraviolet light below 100°C. The solid compositions of this invention are prepared by reacting solid compounds containing at least two ethylenically unsaturated double bonds with compounds containing at least one β-dicarbonyl group. The reaction of an ethylenically unsaturated double bond, such as an acrylate group, with the active methylene group in a β-dicarbonyl function is known in literature as "Michael Addition".

More particularly, the invention relates to a polymerizable solid composition, melting within the range of 40-200°C and containing products having at least one ethylenically unsaturated double bond, obtainable by reacting a compound (A), containing at least two ethylenically unsaturated double bonds, with a compound (B), containing at least one β-dicarbonyl structure element of the formula

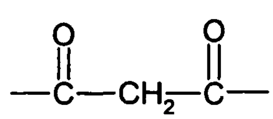

wherein the molar ratio of ethylenically unsaturated double bonds of compound (A) to the β-dicarbonyl structure elements of compound (B) is in the range from 2.5 :1 to 20:1, wherein the compound (A), containing at least two ethylenically unsaturated double bonds, is a solid acrylate, having a melting point > 50°C.

Ethylenically unsaturated compounds, which are suitable for the preparation of the solid compositions of this invention via the Michael-Addition include for example: solid urethaneacrylates such as the reaction product of 2-hydroxyethylacrylate and 1,6-hexanediisocyanate (2-(N-(5-(2-prop-2-enyloxyethoxy)carbonylamino)pentyl)carbamoyloxy)ethyl prop-2-enoate, melting point 81 °C) or solid reaction products of isocyanate end-capped urethane prepolymers with 2-hydroxyethyl acrylate and 2-hydroxyethyl methacrylate, solid epoxyacrylates such as reactions products of poly(bisphenol-A-co-epichlorohydrine) and acrylic acid or reaction products of epoxy-phenol resins and acrylic acid or reaction products of glycidyl methacrylate copolymers and acrylic acid, solid polyesteracrylates prepared from solid polyesterpolyols and acrylic acid, solid triisocyanurates such as tris(2-acryloyloxyethyl) isocyanurate, preferred are solid urethane diacrylates and urethane diacrylate prepolymers.

The compounds containing β-dicarbonyl groups, especially β-diketones and β-ketoesters, which are suitable for the preparation of the solid compositions of this invention include for example: pentane-2,4-dione, 1-phenyl-1,3-butanedione, benzoylacetic acid methyl ester, acetoacetic acid methyl ester, acetoacetic acid ethyl ester, 1,4-butanediol diacetoacetate, 1,6-hexanediol diacetoacetate, neopentyl glycol diacetoacetate, 2-ethyl-2-butyl-1,3-propanediol diacetoacetate, trimethylolpropane triacetoacetate, dimethyl malonate, diethyl malonate, solid acetoacetate group-containing oligomers and polymers obtained by transesterification of acetoacetic acid ethyl esters with solid oligomeric or polymeric polyols, solid acetoacetate group-containing oligomers and polymers obtained by copolymerisation of 2-acetoacetoxyethyl methacrylate, solid oligomers and polymers derived from diols and dimethyl malonate, such as poly (2,2-dimethyl-1,3-propanediol-malonate), melting point 55°C. Preferred are solid diacetoacetates, especially urethane diacetoacteates. Liquid compounds containing β-dicarbonyl groups such as acetylacetone may be used as well as long as the final reaction product is a solid, having the required properties suitable for the preparation of powder coatings. A liquid component carrying the β-dicarbonyl compound may be also converted into a solid by absorption into a silica type filler material, such as fumed silica, as it is well known in the art.

The preparation of the solid compositions of this invention is carried out by reacting the compounds containing the ethylenically unsaturated double bonds with the compounds, containing β-ketoester or β-diketone or β-diester groups at temperatures of 25-150°C in the presence of catalysts, which catalyze the "Michael Addition" such as strong organic or inorganic bases as for example sodium hydroxide and diazabicycloundecene, ammonium and phosphonium salts, as for example tetraethylammonium fluoride and organic phosphines as for example trioctyl phosphine. The amount of added catalyst is 0.3-5.0 weight% referred to the total reaction mixture, preferably 0.7-2.5 weight%. Further reaction conditions for the "Michael Addition" are also described in literature [Organikum, VEB Deutscher Verlag der Wissenschaften, 16. Auflage, Berlin 1986, pages 509-510]. During the reaction of the ethylenically unsaturated double bonds with the β-dicarbonyl groups the reaction mixture is gassed with air. In addition, in the case of sensitive acrylates, a polymerization inhibitor may also be added in an amount of 0.01 to 0.5 weight% in order to prevent an premature polymerization of the acrylate groups during the production. Suitable polymerization inhibitors are for example 4-methoxyphenol and hydroquinone.

Important is the ratio of acrylate groups to β-dicarbonyl groups, which may vary from 2.5.1 to 20 1, preferably 4 1 to 15:1. While the applicant does not wish to be bound by this theory, it seems that the aforementioned ratio is governed by the functionality of the reactants. In general, the higher the functionality of the β-dicarbonyl compounds that are used, the higher should be the excess of acrylate groups so that a meltable solid is formed. In this connection, an estimation of the gel point may be helpful, considering also the functionality of the compounds containing ethylenically unsaturated groups and the compounds containing β-dicarbonyl groups The gel-point may be estimated as shown below:

$$P\ (gel) = \frac{2}{F} \times 100$$

wherein

$$F = \frac{(A+2B)-C}{D}$$

A = Total No. of equivalents of ethylenically unsaturated bonds

B = Total No. of equivalents of β-dicarbonyl groups

C = Total No. of excess equivalents of ethylenically unsaturated bonds

D = Total No. of moles of components at start of reaction

P (gel) is the degree of reaction at gelation Preferably, P (gel) is > 100 for a given ratio of ethylenically unsaturated groups and β-dicarbonyl groups.
Further literature is given also in " Resins for Surface Coatings" Volume 1, P. Oldring (Ed.), SITA Technology London, 1987, pages 137-139. The obtained solid compositions of this invention are colorless or slightly amber-colored solids showing a melting temperature of > 40°C and may be regarded as a solid solution of a polymerizable oligomer or polymer, formed by the reaction of all the β-dicarbonyl groups with a part of the ethylenically unsaturated groups, dissolved in the excess of the starting material carrying the ethylenically unsaturated double bonds.

A special feature of the solid compositions of this invention, containing ethylenically unsaturated double bonds and β-dicarbonyl groups, is that they can be cured by ultraviolet radiation in the absence of any photoinitiator. During the experiments, it turned out unexpectedly that solid compositions of this invention, containing additional urethane groups, are especially useful to make powder coatings, which can be crosslinked at low temperatures by UV-radiation without photoinitiator. The products are curable by UV-radiation at high curing speeds to hard but flexible coatings showing a high degree of solvent resistance and scratch resistance. Another observed result is that the solid composition of this invention containing additional urethane groups exhibit a relatively small melting range and once melted, a considerably low melt viscosity. This accelerates the flow out of the molten powder as well as the leveling and influences positively the overall speed at which the curing process can be run. The additional urethane groups may be introduced by a solid urethane acrylate such as the reaction product of 1,6-hexanediol diisocyanate and 2-hydroxyethylacrylate. The urethane acrylate is then further reacted with a β-dicarbonyl compound such as acetyl acetone, yielding an example of a solid polymerizable composition of this invention.

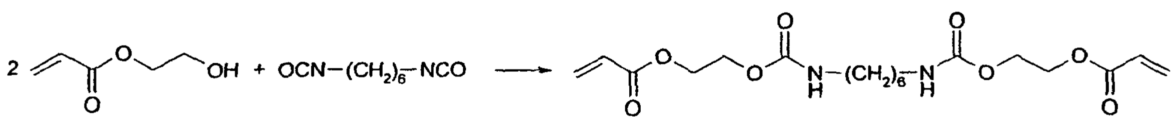

(n + 1) 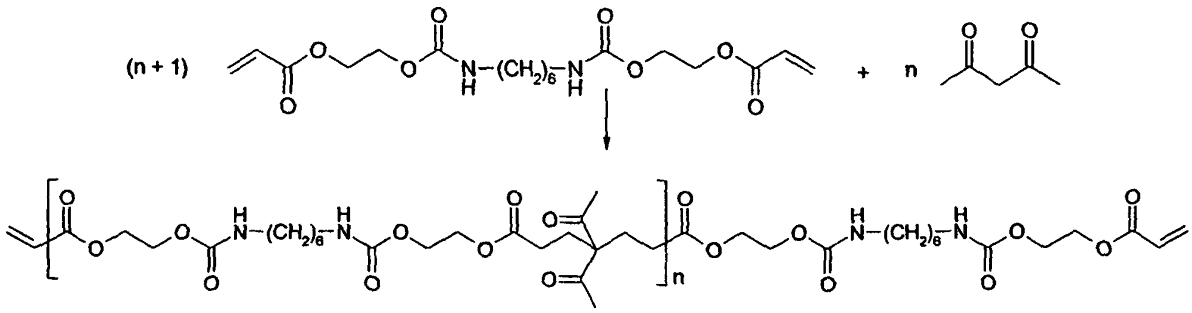

Moreover, the urethane group may also be introduced by a solid compound containing β-dicarbonyl groups and urethane groups as depicted below

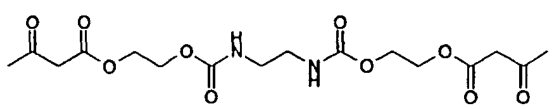

Such compounds are obtained by transesterification of an urethanediol and alkyl acetoacetate. Said urethane diacetoacetate may then be reacted with a large excess of a solid acrylate, giving a product as depicted below,

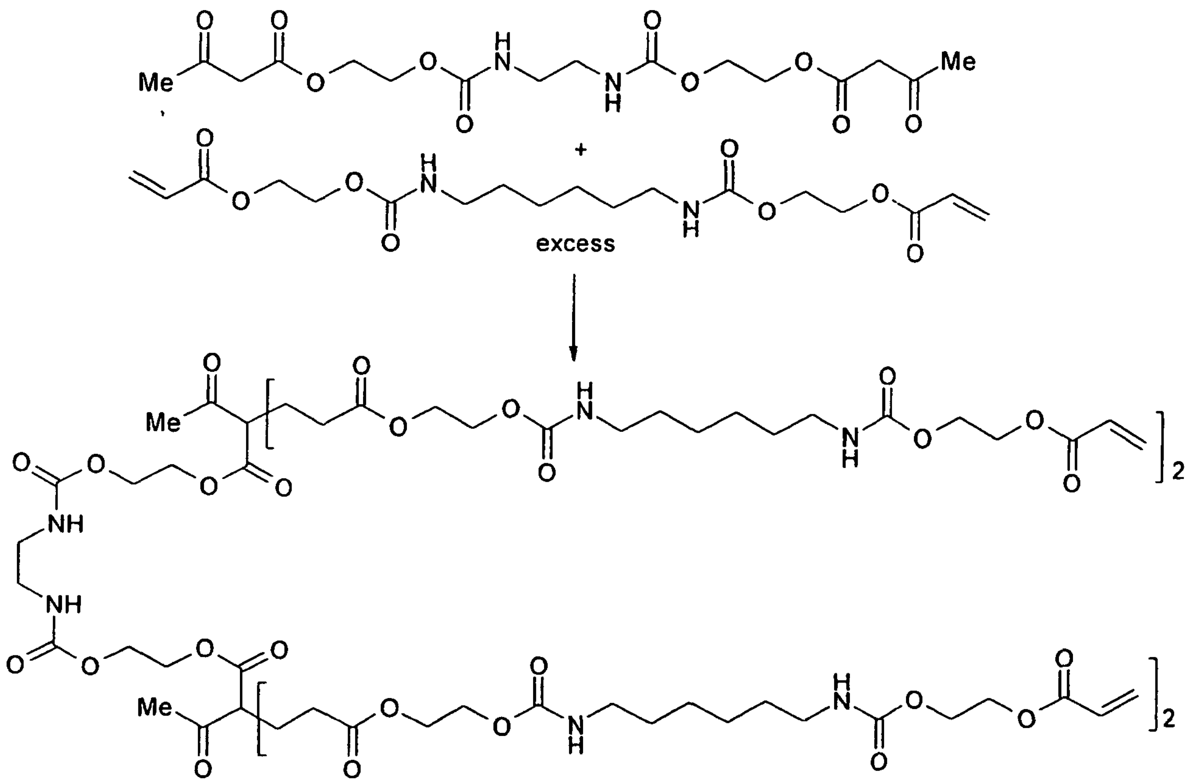


which is dissolved in the excess of the urethane diacrylate. This solid mixture represents another example of a solid polymerizable composition of this invention.

The polymerizable compositions of this invention are useful as powder coatings or useful as components to make powder coatings.

Powder coatings typically involve a complex mixture of chemicals. In addition to the color-carrying pigments, flow and leveling agents, degassing agents, waxes, extender pigments (fillers) and charging agents, a resin and a crosslinker are often used to cure the mixture.

In the present invention the solid compositions derived from acrylates and compounds containing β-dicarbonyl groups, may be used as powder coatings or as components to make powder coatings, especially as crosslinkers.

The solid compositions of this invention may be further blended with other resins containing ethylenically unsaturated functions, such as unsaturated polyester resins, unsaturated polyacrylate or polymethacrylate resins, and/or mixtures thereof. The unsaturated polyester resins, unsaturated polyacrylate or polymethacrylate resins are commercially available or may be prepared according to the methods known in the art.

The powder coatings of this invention may be cured in presence of heat or ultraviolet radiation by the polymerization of the ethylenically unsaturated double bonds. This may be achieved with the help of free radical initiators. They can be divided into two groups: thermally activated initiators and initiators acitvated by ultraviolet radiation. In case that a mixture of both types of initiators is used, this is termed as dual cure.

The thermal initiators useful in the powder coating compositions of this invention are free radical generating compounds, preferably peroxides and azo initiators.

Examples of suitable peroxide initiators, include diacyl peroxides, such as 2-4-dichlorobenzyl peroxide, decanoyl peroxide, lauroyl peroxide, succinic acid peroxide, acetyl peroxide, benzoyl peroxide, and diisobutyryl peroxide, acetyl alkylsulfonyl peroxides, such as acetyl cyclohexylsulfonyl peroxide, dialkyl peroxydicarbonates, such as di(n-propyl) peroxy dicarbonate, di(sec-butyl)peroxy dicarbonate, di(2-ethylhexyl)peroxy dicarbonate, diisopropylperoxy dicarbonate, and dicyclohexylperoxy dicarbonate, peroxy esters, such as alpha-cumylperoxy pivalate, t-amyl neodecanoate, t-amylperoxy neodecanoate, t-butylperoxy neodecanoate, t-amylperoxy pivalate, t-butylperoxy pivalate, 2,5-dimethyl-2,5-di(2-ethylhexanoylperoxy)hexane, t-amylperoxy-2-ethyl hexanoate, t-butylperoxy-2-ethyl hexanoate, and t-butylperoxy isobutyrate, azobis (alkyl nitrile) peroxy compounds, such as 2,2'-azobis-(2,4-dimethylvaleronitrile), azobisisobutyronitrile, and 2,2'-azobis-(2-methylbutyronitrile); t-butyl-peroxymaleic acid, 1,1'-azobis-(1-cyclohexanecarbonitrile). Other examples include peroxy ketals, such as 1,1-di(t-butylperoxy)-3,3,5-trimethylcyclohexane, peroxy esters, such as 2,5-dimethyl-2,5-di(benzoylperoxy) carbonate, t-butylperoxy acetate, t-butylperoxy benzoate, di-t-butyldiperoxy

azelate, and di-t-butyldiperoxy phthalate, dialkylperoxides, such as dicumyl peroxide, 2,5-dimethyl-2,5-di(t-butylperoxy)hexane, t-butyl cumyl peroxide, di-t-butyl peroxide, and 2,5-dimethyl,2,5-di(t-butylperoxy)hexyne-3, hydroperoxides, such as 2,5-dihydroperoxy-2,5-dimethyl hexane, cumene hydroperoxide, t-butyl hydroperoxide and t-amyl hydroperoxide, ketone peroxides, such as n-butyl-4,4-bis-(t-butylperoxy)valerate, 1,1-di(t-butylperoxy)-3,3,5-trimethyl cyclohexane, 1, 1'-di-t-amyl-peroxy cyclohexane, 2,2-di(t-butylperoxy) butane, ethyl-3,3-di(t-butylperoxy)butyrate, and blend of t-butyl peroctoate, and 1,1-di(t-butylperoxy)cyclohexane.
Preferably, the thermal initiators used herein are solids. If liquid initiators are used, however, preferably they are absorbed on solid carriers, such as fumed silica, prior to incorporation in the powder coating compositions of this invention.

The powder coatings of this invention may also be cured by UV-light in absence of photoinitiators or, if required for special performance, mixed with UV photoinitiators that are well known in the art. Examples of suitable photoinitiators, which are known as $\alpha$-cleavage free radical photoinitiators, include benzoin and its derivatives, for example, benzoin ethers, such as isobutyl benzoin ether and benzyl ketals, such as benzyl dimethyl ketal, 2-hydroxy-2-methyl-1-phenylpropan-1-one and 4-(2-hydroxyethoxy) phenyl-2-hydroxy-2-propyl ketone. Others include acyl phosphines, such as 2,4,6-trimethylbenzoyl diphenylphosphine oxide. Aryl ketones can also be used, such as 1-hydroxycyclohexyl phenyl ketone, 2-benzyl-2-dimethylamino-1-(4-morpholinophenyl)-butan-1-one, 2,2-dimethoxy-2-phenylaceto-phenone, mixture of benzophenone and 1-hydroxycyclohexyl phenyl ketone, perfluorinated diphenyl titanocene, and 2-methyl-1-(4-(methylthiophenyl)-2-(4-morpholinyl))-1-propanone. Hydrogen abstraction free radical type photoinitiators can be used in combination with the above or alone such as Michler's ketone (4,4'-bisdimethylamino benzophenone), Michler's ethyl ketone (4,4'-bisdiethylamino benzophenone ethyl ketone), benzophenone, thioxanthone, anthroquinone, ketocoumarin, anthracene, or derivatives thereof, and the like. Usually, the amount of initiators present typically ranges between 0.1 and 10 weight %, preferrably 1 to 5 weight %.

The preparation of the powder coatings of this invention does not require any special procedures and may be carried out using the known methods, preferrably by mixing solid compositions of this invention with the required additives or initiators or secondary resins in the melt, by extrusion and / or kneading at 60-120°C and comminuting the cooled melt or by homogenizing the components of the mixture under high shear forces for example in a ball mill.

The powder coatings containing the solid compositions of this invention are storage stable when unexposed to light. They may be grinded mechanically to a particle size smaller than 100µm and applied on top of a flat substrate or electrostatically deposited after Tribo- or Corona charging onto a substrate which is to be coated. The powder layer is then fused by warming to 60-160°C in a circulation air oven or by radiation heat such as infrared radiation. In case of the preferred crosslinking at low temperatures below 100°C the fused powder is exposed to ultraviolet radiation. The particular choice of ultraviolet radiation is also important such that adequate emission of UV radiation occurs at wavelengths suitable to initiate the curing process. UV lamps are available in several designs. The Fusion "H" bulb is a typical UV source consisting primarily of an electrical discharge in medium pressure mercury vapor. It is also often considered as the industrial standard. The Fusion "D" bulb also contains a small amount of a metal halide, the Fusion "V"-bulb is similar to the D bulb but emits a larger fraction at longer wavelengths. Medium pressure bulbs radiate with an intensity of 200 to 600 watts per inch. For the initiator-free ultraviolet curing of the powder coatings of this invention, the lamp with the "H" bulb is the preferred choice. It contains the largest fraction of radiation below 300nm, which is particularly useful for the ultraviolet curing of the powder coatings of this invention since they show absorption of UV radiation in this wavelength area.

The solid compositions and powder coatings of this invention are especially suitable for coating heat sensitive substrates including hardwood, wood composites, laminated bamboo, particle board, filler board, medium density fiber board, paper or other substrates that contain a significant amount of wood, or otherwise degrade when coated with traditional heat curable powder coatings, plastics, such as ABS, PPO, SMC, polyolefins, acrylics or nylon. Moreover, the use of the solid compositions and powder coatings of this invention is not limited to heat sensitive substrates. Heat resistant substrates, such as steel or aluminum in form of sheets, pipelines or coils, glass screens or ceramic tiles may be coated as well.

This invention will be further explained by a consideration of the following non-limiting examples which are intended to be purely exemplary of this invention

## Examples

Example 1

A Preparation of a solid compound containing ethylenically unsaturated double bonds.

A mixture of 168.0g of 1,6-hexanediisocyanate, 0.30g of 4-methoxyphenol and 0.05g of dibutyltin dilaurate was homogenized at 65°C and sparged with air. Then, 232.0g of 2-hydroxyethyl acrylate was added dropwise over a period of 3 hours so that the temperature did not exceed 85°C. The mixture was stirred for another hour at 85°C and

allowed to cool down to room temperature, yielding 401g of 2-(N-(6-((2-prop-2-enoyloxyethoxy)carbonylamino)hexyl) carbamoyloxy)ethyl prop-2-enoate. Melting point: 81-82°C.

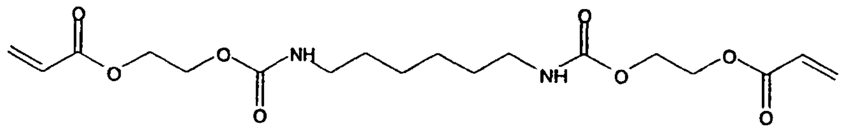

B. Preparation of a solid compound containing acetoacetate groups.

140g of 2-(hydroxyethoxy)-N-(2-((hydroxyethoxy)carbonylamino)ethyl)carboxamid

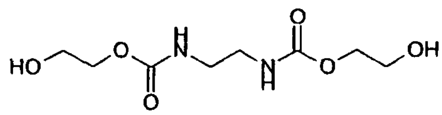

was mixed with 140g of methyl acetoacetate and heated under nitrogen to 130°C Then, during a period of 4 hours, methanol was distilled off and the temperature raised to 160°C. The mixture was allowed to cool down to room-temperature yielding 241g of 2-(N-(2-((2-(3-oxobutanoyloxy)ethoxy)carbonylamino)ethyl) carbamoyloxy)ethyl 3-oxobutanoate Melting point 85-86°C.

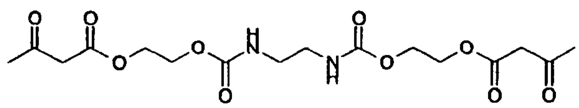

Reaction of compound prepared under (A) with compound prepared under (B):

> 30.0g of urethane acrylate prepared according to A was mixed with 3.6g of urethane diacetoacetate prepared according to B, melted and homogenized at 90°C Then, 0.30g of tri-n-octylphosphine was added dropwise. The mixture was stirred for 30 minutes at 90°C and cooled to room temperature. A light amber colored solid polymerizable mixture was obtained, having a melting range of 65-90°C and a glass transition temperature of 46°C. Molecular number average = 836. Molecular weight average = 1886.

Example 2:

A mixture of 168.0g of 1,6-hexanediisocyanate, 0.30g of 4-methoxyphenol, and 0.05g of dibutyltin dilaurate was homogenised at 65°C and sparged with air Then, 232.0g of 2-hydroxyethyl acrylate was added dropwise over a period of 3 hours so that the temperature did not exceed 85°C. The mixture was stirred for another hour at 85°C before a mixture of 80.0g of methyl acetoacetate and 5.0g of tetramethyl guanidine was added dropwise so that the temperature did not exceed 95°C. Then, the mixture was allowed to stir for another hour at 80-85°C and cooled to room temperature. The resin-like product solidified over night and showed a melting range of 45-55°C. Molecular number average = 1285. Molecular weight average = 2335.

Example 3

As example 2, but with 50g of acetylacetone instead of methyl acetoacetate. Melting range: 42-46°C Molecular number average = 1100. Molecular weight average = 1900.

Example 4

273.0g of Epiclon 1050 (bisphenol-A-epoxy resin from Dainippon Ink & Chemicals, Japan) was melted in resin reactor at 115°C. Then, 0.3g of 4-methoxyphenol and 2.5g of benzyl triethylammonium chloride was added and the mixture was sparged with air. 35.0g of acrylic acid was added dropwise within 15 minutes. Acid number of the mixture after the addition was 113. The mixture was stirred and sparged with air for a period of 90 minutes at 115-120°C within the acid-value dropped to 8 At that point the formed intermediate bisphenol-A-diacrylate showed a molecular number average of 1300. Then, the mixture was allowed to cool down to 100°C and stirred very slowly while 20 0g of acetyl acetone and 3.0g of diazabicycloundecene was added. A considerable increase in viscosity took place within 2 minutes. A colorless solid was obtained, having a melting range of 86-100°C and a glass transition temperature of 51°C. Molecular number average = 1900. Molecular weight average =4800.

Example 5

(Preparation and initiator-free UV-curing of a powder coating from the solid composition of example 1)

The solid product of example 1 was grinded in ultra centrifugal mill to a powder and classified through a 100 μm test screen on top of an aluminum substrate until a coating weight of 120g /$m^2$ was reached. Then, the substrate was warmed to 90°C for a period of 3 minutes within all of the powder fused Then, the powder was cured by ultraviolet radiation with a Fusion F300H bulb at a curing speed of 20 meter /minute.

| Coating properties: | |
|---|---|
| Hardness (pencil hardness) | 2-3H |
| Solvent resistance | > 100 MEK double rubs |
| Flexibility | 4 mm Madrell diameter |

Example 6

(Preparation and thermal-curing of a powder coating from the solid composition of example 3)

110 0g of the solid composition of example 3 was mixed with 2.0g of finely powdered n-butyl-4,4-bis(t-butyloxy) valerate (Luperox 230XL from Atofina) at 75°C. Then, the mixture was allowed to cool down to room temperature The solid mixture was crushed and grinded in ultra centrifugal mill to a powder and classified through a 100 μm test screen on top of an aluminum substrate until a coating weight of 150g /$m^2$ was reached. Then, the substrate was warmed to 145°C for a period of 5 minutes within all of the powder fused and then crosslinked.

| Coating properties: | |
|---|---|
| Hardness (pencil hardness) | H-2H |
| Solvent resistance | > 100 MEK double rubs |

Example 7

(Preparation and UV-curing of a powder coating containing an unsaturated polyester and the solid composition of example 3, acting as a crosslinker)

80.0g of the unsaturated polyester MR 8010 (product of from Dainippon Ink & Chemicals, Japan) was mixed with 20g of the product of example 3 and 2.5g of 2-hydroxy-4'-(2-hydroxyethoxy)-2-methylpropiophenone (Irgacure 2959, product of Ciba, Switzerland). The mixture was homogenized at 100°C and allowed to cool down to room-temperature. The solid product was grinded in a ultra centrifugal mill and classified through a 100 μm test screen on top of an aluminum substrate until a coating weight of 150g /$m^2$ was reached. Then, the substrate was warmed to 100°C for a period of 5 minutes within all of the powder fused. Then, the powder was cured by ultraviolet radiation with a Fusion F300H bulb at a curing speed of 16 meter/minute (4 passes).

| Coating properties: | |
|---|---|
| Hardness (pencil hardness) | H-2H |

(continued)

| Coating properties: | |
|---|---|
| Solvent resistance | > 100 MEK double rubs |

## Claims

**1.** A polymerizable solid composition, melting within the range of 40-200°C and containing products having at least one ethylenically unsaturated double bond, obtainable by reacting a compound (A), containing at least two ethylenically unsaturated double bonds, with a compound (B), containing at least one β-dicarbonyl structure element of the formula

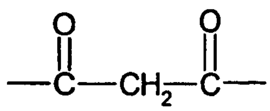

wherein the molar ratio of ethylenically unsaturated double bonds of compound (A) to the β-dicarbonyl structure elements of compound (B) is in the range from 2.5 :1 to 20:1, wherein the compound (A), containing at least two ethylenically unsaturated double bonds, is a solid acrylate, having a melting point > 50°C.

**2.** A polymerizable solid composition according to claim 1, wherein said acrylate is a solid polyesteracrylate, solid epoxyacrylate or solid urethaneacrylate.

**3.** A polymerizable solid composition according to claim 1, wherein the compound (B), containing the β-dicarbonyl structure element, is a solid, having a melting point > 50°C.

**4.** A polymerizable solid composition according to claim 1, wherein the compound (B), containing the β-dicarbonyl structure element, contains also urethane groups.

**5.** A polymerizable solid composition according to claim 1, wherein the compound (A), containing ethylenically unsaturated double bonds, is an urethane acrylate and the compound (B), containing the β-dicarbonyl groups, is acetylacetone, methyl acetoacetate, ethyl acetoacetate, dimethylmalonate or diethylmalonate.

**6.** A polymerizable solid composition according to claim 1, wherein the compound (A), containing ethylenically unsaturated double bonds, is an urethane acrylate and the compound (B), containing β-dicarbonyl groups, is a di- or triacetoacetate carrying urethane groups.

**7.** A polymerizable solid composition according to claim 1, having a glass transition temperature > 35°C.

**8.** A polymerizable solid composition according to claim 1, wherein the reaction of compound (A), containing ethylenically unsaturated double bonds, with compound (B), containing β-dicarbonyl groups, is carried out in presence of a catalyst.

**9.** A polymerizable solid composition according to claim 8, wherein the catalyst is an organic or inorganic base, an ammonium or phosphonium salt or an organic phosphine.

**10.** Use of the polymerizable solid composition according to claim 1-9 as powder coating or as a component to make a powder coating.

**11.** Powder coating containing a polymerizable solid composition according to claim 1-9, **characterized in that** it is curable by heat.

**12.** Powder coating according to claim 11, **characterized in that** it contains additional free radical initiators.

13. Powder coating according to claim 12, **characterized in that** the free radical initiator is a peroxide- or azo-initiator.

14. Powder coating containing a polymerizable solid composition according to claim 1-9, **characterized in that** it is curable by ultraviolet (UV) light.

15. Powder coating according to claim 14, **characterized in that** it contains additional photoinitiators.

16. Powder coating according to claim 14, **characterized in that** it can be crosslinked in a temperature range of 40-160°C, preferably 60-100°C.

17. Powder coating according to claim 11-16, **characterized in that** it contains additional solid ethylenically unsaturated oligomers an/or polymers.

18. Crosslinked coating obtained from the powder coatings according to claim 11-17.

19. Substrates, containing at least one coating according to claim 18.

**Patentansprüche**

1. Polymerisierbare feste Zusammensetzung, die im Bereich von 40-200°C schmilzt und Produkte mit mindestens einer ethylenisch ungesättigten Doppelbindung enthält, erhältlich durch Umsetzen einer Verbindung (A), die mindestens zwei ethylenisch ungesättigte Doppelbindungen enthält, mit einer Verbindung (B), die mindestens ein β-Dicarbonyl-Strukturelement der Formel

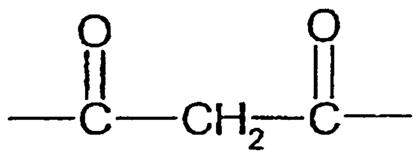

enthält,
wobei das molare Verhältnis ethylenisch ungesättigter Doppelbindungen der Verbindung (A) zu den β-Dicarbonyl-Strukturelementen der Verbindung (B) im Bereich von 2,5:1 bis 20:1 liegt, wobei die Verbindung (A), die mindestens zwei ethylenisch ungesättigte Doppelbindungen enthält, ein festes Acrylat ist, das einen Schmelzpunkt > 50°C aufweist.

2. Polymerisierbare feste Zusammensetzung nach Anspruch 1, wobei das Acrylat ein festes Polyesteracrylat, ein festes Epoxyacrylat oder ein festes Urethanacrylat ist.

3. Polymerisierbare feste Zusammensetzung nach Anspruch 1, wobei die Verbindung (B), die das β-Dicarbonyl-Strukturelement enthält, ein Feststoff mit einem Schmelzpunkt > 50°C ist.

4. Polymerisierbare feste Zusammensetzung nach Anspruch 1, wobei die Verbindung (B), die das β-Dicarbonyl-Strukturelement enthält, auch Urethangruppen enthält.

5. Polymerisierbare feste Zusammensetzung nach Anspruch 1, wobei die Verbindung (A), die ethylenisch ungesättigte Doppelbindungen enthält, ein Urethanacrylat ist und die Verbindung (B), die die β-Dicarbonyl-Gruppen enthält, Acetylaceton, Methylacetoacetat, Ethylacetoacetat, Dimethylmalonat oder Diethylmalonat ist.

6. Polymerisierbare feste Zusammensetzung nach Anspruch 1, wobei die Verbindung (A), die ethylenisch ungesättigte Doppelbindungen enthält, ein Urethanacrylat ist und die Verbindung (B), die β-Dicarbonyl-Gruppen enthält, ein Di- oder Triacetoacetat ist, das Urethangruppen trägt.

7. Polymerisierbare feste Zusammensetzung nach Anspruch 1, die eine Glasubergangstemperatur > 35°C besitzt.

8. Polymerisierbare feste Zusammensetzung nach Anspruch 1, wobei die Umsetzung von Verbindung (A), die ethylenisch ungesättigte Doppelbindungen enthält, mit Verbindung (B), die β-Dicarbonyl-Gruppen enthält, in Gegenwart eines Katalysators durchgeführt wird.

9. Polymerisierbare feste Zusammensetzung nach Anspruch 8, wobei der Katalysator eine organische oder anorganische Base, ein Ammonium- oder Phosphoniumsalz oder ein organisches Phosphin ist.

10. Verwendung der polymerisierbaren festen Zusammensetzung nach Anspruch 1-9 als Pulverbeschichtung oder als eine Komponente zur Herstellung einer Pulverbeschichtung.

11. Pulverbeschichtung, die eine polymerisierbare feste Zusammensetzung nach Anspruch 1-9 enthält, **dadurch gekennzeichnet, dass** sie durch Wärme härtbar ist.

12. Pulverbeschichtung nach Anspruch 11, **dadurch gekennzeichnet, dass** sie zusätzlich Radikalinitiatoren enthält.

13. Pulverbeschichtung nach Anspruch 12, **dadurch gekennzeichnet, dass** der Radikalinitiator ein Peroxid- oder Azoinitiator ist.

14. Pulverbeschichtung, die eine polymerisierbare feste Zusammensetzung nach Anspruch 1-9 enthält, **dadurch gekennzeichnet, dass** sie durch Ultraviolettlicht (UV) härtbar ist.

15. Pulverbeschichtung nach Anspruch 14, **dadurch gekennzeichnet, dass** sie zusätzliche Photoinitiatoren enthält.

16. Pulverbeschichtung nach Anspruch 14, **dadurch gekennzeichnet, dass** sie in einem Temperaturbereich von 40-160°C, vorzugsweise 60-100°C vernetzt werden kann.

17. Pulverbeschichtung nach Anspruch 11-16, **dadurch gekennzeichnet, dass** sie zusätzliche feste ethylenisch ungesättigte Oligomere und/oder Polymere enthält.

18. Vernetzte Beschichtung, erhalten aus den Pulverbeschichtungen nach Anspruch 11-17

19. Substrate, die mindestens eine Beschichtung nach Anspruch 18 enthalten.

## Revendications

1. Composition solide polymérisable fondant dans l'intervalle de 40 à 200°C et contenant des produits ayant au moins une double liaison éthyléniquement insaturée, pouvant être obtenue par réaction d'un composé (A) contenant au moins deux doubles liaisons éthyléniquement insaturées, avec un composé (B) contenant au moins un élément de structure dicarbonyle β de formule :

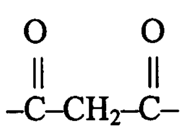

dans laquelle le rapport molaire des doubles liaisons éthyléniquement insaturées du composé (A) sur les éléments de structure dicarbonyle β du composé (B) est de l'ordre de 2,5:1 à 20:1, dans laquelle le composé (A) contenant au moins deux doubles liaisons éthyléniquement insaturées est un acrylate solide ayant un point de fusion > 50°C.

2. Composition solide polymérisable selon la revendication 1, dans laquelle ledit acrylate est un polyester acrylate solide, un époxyacrylate solide ou un uréthane acrylate solide.

3. Composition solide polymérisable selon la revendication 1, dans laquelle le composé (B) contenant l'élément de structure dicarbonyle β est un solide ayant un point de fusion > 50°C.

4. Composition solide polymérisable selon la revendication 1, dans laquelle le composé (B) contenant l'élément de structure dicarbonyle β contient aussi des groupes uréthane.

5. Composition solide polymérisable selon la revendication 1, dans laquelle le composé (A) contenant les doubles liaisons éthyléniquement insaturées est un uréthane acrylate et le composé (B) contenant les groupes dicarbonyle β est l'acétylacétone, l'acétoacétate de méthyle, l'acétoacétate d'éthyle, le diméthylmalonate ou le diéthylmalonate.

6. Composition solide polymérisable selon la revendication 1, dans laquelle le composé (A) contenant des doubles liaisons éthyléniquement insaturées est un uréthane acrylate, et le composé (B) contenant des groupes dicarbonyle β est un di- ou tri-acétoacétate portant des groupes uréthane.

7. Composition solide polymérisable selon la revendication 1, ayant une température de transition vitreuse > 35°C.

8. Composition solide polymérisable selon la revendication 1, dans laquelle la réaction du composé (A) contenant des doubles liaisons éthyléniquement insaturées, avec le composé (B) contenant des groupes dicarbonyle β est effectuée en présence d'un catalyseur.

9. Composition solide polymérisable selon la revendication 8, dans laquelle le catalyseur est une base organique ou inorganique, un sel d'ammonium ou de phosphonium ou une phosphine organique.

10. Utilisation d'une composition solide polymérisable selon l'une quelconque des revendications 1 à 9, sous la forme d'une poudre pour revêtement ou sous la forme d'un composant pour faire une poudre pour revêtement.

11. Poudre pour revêtement contenant une composition solide polymérisable selon l'une quelconque des revendications 1 à 9, **caractérisée en ce qu'**elle est durcissable par la chaleur.

12. Poudre pour revêtement selon la revendication 11, **caractérisée en ce qu'**elle contient des initiateurs de radicaux libres additionnels.

13. Poudre pour revêtement selon la revendication 12, **caractérisée en ce que** l'initiateur de radicaux libres est un initiateur peroxyde ou un initiateur azo.

14. Poudre pour revêtement contenant une composition solide polymérisable selon l'une quelconque des revendications 1 à 9, **caractérisée en ce qu'**elle est durcissable par la lumière ultraviolette (UV).

15. Poudre pour revêtement selon la revendication 14, **caractérisée en ce qu'**elle contient des photo-initiateurs additionnels.

16. Poudre pour revêtement selon la revendication 14, **caractérisée en ce qu'**elle peut être réticulée dans un intervalle de température de 40 à 160°C, de préférence de 60 à 100°C.

17. Poudre pour revêtement selon l'une quelconque des revendications 11 à 16, **caractérisée en ce qu'**elle contient des oligomères et/ou polymères solides additionnels, éthyléniquement insaturés.

18. Revêtement réticulé obtenu à partir des poudres pour revêtement selon l'une quelconque des revendications 11 à 17.

19. Substrats contenant au moins un revêtement selon la revendication 18.